# EUROPÄISCHE PATENTANMELDUNG

(11) **EP 0 770 523 A1**
(43) Veröffentlichungstag der Anmeldung: **02.05.1997**
(21) Anmeldenummer: 96116573.5
(22) Anmeldetag: 16.10.1996
(51) Int. Cl.: B60R 22/22

(54) **Befestigungsbeschlag für ein Gurtschloss**

(30) Priorität: 25.10.1995 DE 29517162 U
(71) Anmelder: TRW Occupant Restraint Systems GmbH, 73551 Alfdorf (DE)
(72) Erfinder: Wier, Franz, 73571 Göggingen (DE)
(74) Vertreter: Degwert, Hartmut, Dipl.-Phys.

(57) **Zusammenfassung**

Ein Befestigungsbeschlag für ein Gurtschloß in einem Sicherheitsgurtsystem, mit einem ersten Befestigungsabschnitt (14a) zur Befestigung am Fahrzeugaufbau, einem zweiten Befestigungsabschnitt (14b) zur Befestigung des lasttragenden Gehäuses des Gurtschlosses und einem langgestreckten, elastisch biegbaren Zwischenteil (14c) ist dadurch gekennzeichnet, daß die Befestigungsabschnitte (14a,14b) und der Zwischenteil (14c) einstückig miteinander aus Federstahlblech (14;20,22,24) hergestellt sind.

## Beschreibung

Die Erfindung betrifft einen Befestigungsbeschlag für ein Gurtschloß in einem Sicherheitsgurtsystem, mit einem ersten Befestigungsabschnitt zur Befestigung am Fahrzeugaufbau, einem zweiten Befestigungsabschnitt zur Befestigung des lasttragenden Gehäuses des Gurtschlosses und einem langgestreckten, elastisch biegbaren Zwischenteil.

Herkömmliche Befestigungsbeschläge dieser Art bestehen aus einem Drahtseilabschnitt, an dessen Enden jeweils ein Befestigungsteil aufgepreßt ist. Der Drahtseilabschnitt verleiht dem Beschlag die erwünschte elastische Biegbarkeit und zugleich die erforderliche hohe Festigkeit. Jedoch ist ein solches Beschlagteil mit relativ hohem Fertigungsaufwand und auch mit relativ hohem Gewicht verbunden.

Durch die Erfindung wird ein Befestigungsbeschlag für ein Gurtschloß zur Verfügung gestellt, der sich durch einfache Herstellbarkeit und geringes Gewicht auszeichnet. Die Besonderheit des erfindungsgemäßen Befestigungsbeschlages besteht darin, daß die Befestigungsabschnitte und der Zwischenteil einstückig miteinander aus Federstahlblech hergestellt sind.

Ein solcher Befestigungsbeschlag verfügt über alle erwünschten mechanischen Eigenschaften: hohe Festigkeit, Biegsamkeit und elastische Rückstellung. Gegenüber einem herkömmlichen Beschlag wird eine große Gewichtseinsparung von bis zu 70% erzielt, da eine Dicke des Federstahlblechs von nur etwa 1,0 bis 1,5 mm ausreicht. Die Herstellung gestaltet sich besonders einfach, da der gesamte Beschlag lediglich aus einem Blech ausgestanzt wird. Der Beschlag kann aus einer einzigen Lage Federstahlblech oder aus mehreren übereinanderliegende Lagen Federstahlblech bestehen.

Nachdem der Befestigungsbeschlag aus einem dünnen Blech besteht, könnte alternativ auch ein hochfester Stahl mit einer Festigkeit im Bereich von 1400N/mm² bis 2000N/mm² verwendet werden, beispielsweise hochvergüteter C-Stahl, eventuell gewalzt, da die Eigenschaften eines solchen Stahls, wenn er in einer ausreichend dünnen Lage verwendet wird, denjenigen von Federstahl entsprechen.

Die Erfindung wird nachfolgend unter Bezugnahme auf die beigefügte Zeichnung beschrieben. In dieser zeigen:
- Fig. 1: perspektivisch und schematisch eine Ausführungsform eines Gurtschlosses mit einem erfindungsgemäßen Befestigungsbeschlag;
- Fig. 2: vergrößert einen Ausschnitt einer Variante des in Fig. 1 dargestellten Befestigungsbeschlages;
- Fig. 3: eine schematische Querschnittsansicht einer Weiterbildung eines erfindungsgemäßen Befestigungsbeschlags; und
- Fig. 4: vergrößert einen Teil des in Fig. 3 dargestellten Befestigungsbeschlages.

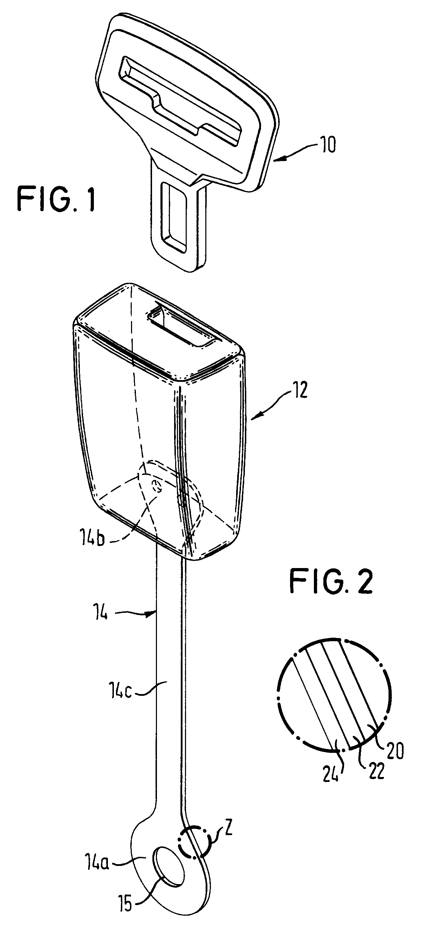

Das in Fig. 1 dargestellte Gurtschloß besteht aus einer Einsteckzunge 10 und einem Schloßkopf 12. An dem lasttragenden Gehäuse des Schloßkopfes 12 ist ein Befestigungsbeschlag angeschlossen. Dieser besteht bei der in dieser Figur dargestellten Ausführungsform aus einem einlagigen Federstahlblech 14 und weist einen ersten Befestigungsabschnitt 14a mit einer Öffnung 15 zur Befestigung am Fahrzeugaufbau, einen zweiten Befestigungsabschnitt 14b zur Befestigung am Schloßkopf 12 und einen langgestreckten Zwischenteil 14c auf, wobei die beiden Befestigungsabschnitte 14a, 14b und das Zwischenteil 14c einstückig ausgeführt sind. Die Materialstärke des einlagigen Federstahlbleches beträgt nur etwa 1,0 bis 1,5 mm.

In Fig. 2 ist vergrößert der Abschnitt Z des in Fig. 1 dargestellten Befestigungsbeschlages dargestellt. Bei der in dieser Figur dargestellten Variante besteht der Befestigungsbeschlag aus drei Lagen Federstahlblech 20, 22, 24, die zueinander kongruent sind. Zusätzlich zu der Gewichtseinsparung, die bereits von der Ausführungsform aus Fig. 1 bekannt ist, wird mit der in Fig. 2 dargestellten Variante eine besonders hohe Flexibilität erzielt. Jede einzelne Lage 20, 22, 24 weist Dicke von etwa 0,2 bis 0,8 mm auf. Obwohl alle drei Lagen 20, 22, 24 mit gleicher Dicke dargestellt sind, können auch Lagen mit unterschiedlicher Dicke verwendet werden.

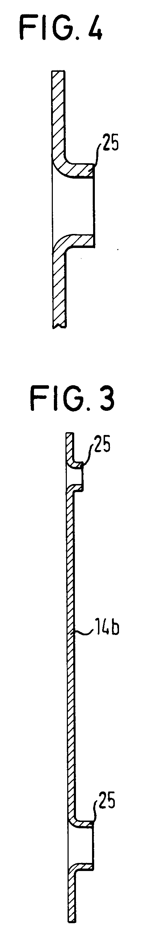

In den Figuren 3 und 4 ist eine Weiterbildung eines erfindungsgemäßen Befestigungsbeschlages dargestellt. Diese Weiterbildung unterscheidet sich von der in Figur 1 dargestellten Ausführungsform durch einen hülsenförmigen Ansatz 25 an mindestens einem der Befestigungsabschnitte um die in diesem ausgebildete Öffnung herum. Dieser Ansatz 25 kann entweder zur Außenseite des Befestigungsbeschlages gerichtet sein, so daß er als Distanzstück wirkt, oder bei einem aus mehreren Lagen bestehenden Befestigungsbeschlag zur Innenseite des Beschlags, wobei die anderen Lagen des Befestigungsbeschlages mit einer entsprechend größeren Öffnung versehen sind, die von dem Ansatz durchgriffen wird. Auf diese Weise läßt sich einer höhere Belastbarkeit der Befestigungsabschnitte 14a, 14b erzielen.

Der erfindungsgemäße Befestigungsbeschlag kann ganz oder teilweise mit einem Schrumpfschlauch oder einem Kantenschutz versehen sein, der Beschädigungen beispielsweises des Fahrzeugsitzes verhindert.

## Patentansprüche

1. Befestigungsbeschlag für ein Gurtschloß in einem Sicherheitsgurtsystem, mit einem ersten Befestigungsabschnitt zur Befestigung am Fahrzeugaufbau, einem zweiten Befestigungsabschnitt zur Befestigung des lasttragenden Gehäuses des Gurtschlosses und einem langgestreckten, elastisch biegbaren Zwischenteil, dadurch gekennzeichnet, daß die Befestigungsabschnitte (14a, 14b) und der Zwischenteil (14c) einstückig miteinander aus Federstahlblech (14; 20, 22, 24) hergestellt sind.

2. Befestigungsbeschlag nach Anspruch 1, dadurch gekennzeichnet, daß eine einzige Lage (14) aus Federstahlblech (14) mit einer Dicke von etwa 1,0 bis 1,5 vorgesehen ist.

3. Befestigungsbeschlag nach Anspruch 1, dadurch gekennzeichnet, daß mehrere Lagen (20, 22, 24) aus Federstahlblech vorgesehen sind, wobei jede Lage eine Dicke von etwa 0,2 bis etwa 0,8 mm hat.

4. Befestigungsbeschlag nach Anspruch 3, dadurch gekennzeichnet, daß drei Lagen (20, 22, 24) aus Federstahlblech vorgesehen sind.

5. Befestigungsbeschlag nach einem der vorhergehenden Ansprüche, dadurch gekennzeichnet, daß mindesetens einer der Befestigungsabschnitte (14a, 14b) mit einem hülsenförmigen Ansatz (25) versehen ist.
